# EUROPÄISCHE PATENTANMELDUNG

(11) **EP 4 067 682 A1**
(43) Veröffentlichungstag der Anmeldung: **05.10.2022**
(21) Anmeldenummer: 22163702.8
(22) Anmeldetag: 23.03.2022
(51) Int. Cl.: F16C 32/04

(54) **SPINNROTOR-LAGERUNG EINER ROTORSPINNVORRICHTUNG MIT EINEM ROTORSCHAFT UND EINER LAGEREINHEIT**

(30) Priorität: 29.03.2021 DE 102021107819
(71) Anmelder: Maschinenfabrik Rieter AG, 8406 Winterthur (CH)
(72) Erfinder: Jungmayr, Gerald, 4050 Traun (AT); Santner, Robert, 4040 Linz (AT)
(74) Vertreter: Canzler & Bergmeier Patentanwälte Partnerschaft mbB

(57) **Zusammenfassung**

Bei einer Spinnrotor-Lagerung einer Rotorspinnvorrichtung mit einem Rotorschaft (10) eines Spinnrotors (2) und mit einer Lagereinheit (1) zum kombinierten radialen und axialen Lagern des Rotorschafts umfasst der Rotorschaft einen Permanentmagneten (20) und eine Stirnfläche. Die Lagereinheit umfasst einen Stator mit einem ersten, axialen Joch (11) und einem zweiten, radialen Joch (12), wobei das erste Joch eine erste Öffnung mit einem ersten Durchmesser aufweist, in welcher ein Absatz angeordnet ist. Das zweite Joch weist eine zweite Öffnung mit einem zweiten Durchmesser auf. Zwischen der ersten Öffnung und dem Rotorschaft ist ein radialer Luftspalt gebildet. Zwischen der Stirnfläche und dem Absatz ist ein axialer Luftspalt gebildet. Zwischen der Umfangsfläche des Rotorschafts und dem zweiten Joch ist ein weiterer radialer Luftspalt gebildet und der Permanentmagnet des Rotorschafts ist zwischen dem ersten Joch und dem zweiten Joch angeordnet.

## Beschreibung

Die vorliegende Erfindung betrifft das Gebiet der Magnetlagertechnik, insbesondere ein kombiniertes Axial/Radial-Magnetlager für die Lagerung eines Spinnrotors einer Rotorspinnvorrichtung, welches sowohl axiale als auch radiale Lagerkräfte aufnehmen kann. Die Spinnrotor-Lagerung der Rotorspinnvorrichtung weist einen Rotorschaft eines Spinnrotors und eine Lagereinheit zum kombinierten radialen und axialen Lagern des Rotorschafts auf, wobei der Rotorschaft einen ersten und einen zweiten Schaftdurchmesser und mindestens einen zwischen dem ersten und zweiten Schaftdurchmesser angeordneten Permanentmagneten umfasst und ausgehend von dem ersten Schaftdurchmesser des Rotorschafts an einer Seite des Permanentmagneten eine sich radial zu einer Achse des Rotorschafts hin erstreckende Stirnfläche aufweist.

Magnetlager ermöglichen die Lagerung einer Welle, hier eines Rotorschafts, ohne Materialkontakt mittels magnetischer Kräfte. Die Lagerkraft wird üblicherweise durch geregelte Elektromagnete erzeugt. Die Stabilität des elektromechanischen Systems wird durch eine geeignete Rückkopplung und elektronische Regelung gewährleistet. Oft wird in Magnetlagern auch eine Kombination von Elektromagneten und Permanentmagneten verwendet. Magnetlager können sowohl als Axiallager als auch als Radiallager ausgeführt sein. Häufig ist es notwendig, beide Typen von Lagern in einer Maschine zu kombinieren, um Lagerkräfte, in Bezug auf die Drehachse der gelagerten Welle, sowohl in axialer Richtung als auch in radialer Richtung aufnehmen zu können. In der Regel benötigt eine Maschine, z.B. ein Elektromotor oder ein Magnetgetriebe, zwei oder mehr Radiallager und zumindest ein Axiallager, um den Rotorschaft in der gewünschten Position zu halten.

Aus der DE 196 42 471 A1 ist eine Offenend-Rotorspinnvorrichtung mit einem Spinnrotor bekannt, dessen Rotorschaft im Zwickel zweier Stützscheibenpaare gelagert, über ein Axiallager abgestützt und durch einen elektromotorischen Einzelantrieb beaufschlagt ist, dessen Stator am Spinnboxgehäuse festgelegt ist. Der Rotorschaft ist als Hohlwelle ausgebildet und innerhalb der Hohlwelle ist ein Läufer eines elektromotorischen Einzelantriebs integriert. Die Lagerung des Rotorschafts ist allerdings sehr unpräzise.

Aus der DE 10 2006 053 734 A1 ist ein Rotorantrieb einer Offenend-Spinnvorrichtung bekannt. Der Rotorantrieb treibt einen eine Welle bildenden Rotorschaft und einen daran angeordneten Rotortopf an. Rotorschaft und Rotortopf bilden den Spinnrotor, mit dem ein Faden gesponnen wird. Der Rotorschaft ist Teil eines Läufers des Rotorantriebs und ist auf beiden Seiten des Rotorantriebs magnetisch gelagert. Die Lagerung erfolgt mittels jeweils zweier Permanentmagnetringe und einer definiert bestrombaren Magnetlagerspule. Mit diesen Elementen und einem induktiven Sensor wird die axiale Position des im Betrieb frei schwebenden Spinnrotors geregelt. Auf diese Weise gelingt es zwar, die axiale Position der Welle und damit des Spinnrotors relativ genau bestimmen und einhalten zu können. Die radiale Position des Rotorschafts und des Spinnrotors bewegt sich dabei allerdings in einer großen Toleranz. Um einen gleichmäßigen und unterbrechungsfreien Faden spinnen zu können, ist allerdings neben der axialen auch die radiale Position des Spinnrotors außerordentlich wichtig.

Spinnrotoren in modernen Offenend-Rotorspinnmaschinen werden mit bis zu 200.000 Umdrehungen pro Minute betrieben. Sie weisen Rotortöpfe auf, in welche die Fasern eingespeist und aus welchen sie als Faden wieder abgezogen werden. Die Rotortöpfe können einen Durchmesser von mehr als 20 Millimeter und bis zu über 40 Millimeter haben. Beim Betrieb der Spinnrotoren wirken sehr hohe Kräfte auf den Rotortopf und die Lagerung des Spinnrotors. Eine stabile und störungsfreie Lagerung der Spinnrotoren ist besonders wichtig, um einerseits einen möglichst gleichmäßigen Faden erzeugen zu können und andererseits einen sicheren und störungsfreien Betrieb der Spinnvorrichtung gewährleisten zu können.

Aus der WO 93/05310 A1 ist eine radiale Magnetlagerung bekannt. Zwischen Polschenkeln eines Stators, die von einer Spule umgeben sind, ist eine Welle angeordnet. Die Welle wird durch ein magnetisches Feld zwischen den Spulen radial zentriert und gehalten. Die Lagerung und Zentrierung kann mittels eines aktiven Regelungssystems erfolgen.

Eine der vorliegenden Erfindung zugrunde liegende Aufgabe besteht darin, bekannte Konzepte zur Lagerung eines Rotorschafts mittels Magnetlagertechnik zu verbessern. Die Lagerung soll präzise in axialer und radialer Richtung erfolgen und der Rotorschaft soll einfach in die Lagerung ein und wieder ausgebaut werden können.

Die oben genannte Aufgabe wird durch die Gegenstände der unabhängigen Patentansprüche gelöst. Verschiedene Ausführungsformen und Weiterentwicklungen sind in den abhängigen Patentansprüchen beschrieben.

Eine erfindungsgemäße Spinnrotor-Lagerung einer Rotorspinnvorrichtung weist einen Rotorschaft eines Spinnrotors und eine Lagereinheit zum kombinierten radialen und axialen Lagern des Rotorschafts auf. Der Rotorschaft umfasst einen ersten und einen zweiten Schaftdurchmesser und mindestens einen zwischen dem ersten und zweiten Schaftdurchmesser angeordneten Permanentmagneten. Ausgehend von dem ersten Schaftdurchmesser des Rotorschafts ist an einer Seite des Permanentmagneten eine sich radial zu einer Achse des Rotorschafts hin erstreckende Stirnfläche angeordnet. Die Lagereinheit umfasst einen Stator mit einem ersten Joch und einem zweiten Joch, wobei das erste Joch eine erste Aktorspule und eine erste Öffnung mit einem ersten Durchmesser aufweist, in welcher ein sich radial zur einer Achse des ersten Jochs hin erstreckender Absatz angeordnet ist. Den ersten Joch wird insbesondere die axiale Lagerung des Rotorschafts bewirkt. Das zweite Joch weist zumindest zwei zweite Aktorspulen und eine zweite Öffnung mit einem zweiten Durchmesser auf. Das zweite Joch dient insbesondere zur radialen Lagerung des Rotorschafts. Das erste Joch und das zweite Joch sind in axialer Richtung des Rotorschafts voneinander beabstandet. Bei einer Anordnung des Rotorschafts in der Lagereinheit im Betrieb der Lagerung ist der erste Durchmesser der ersten Öffnung größer als der erste Schaftdurchmesser, so dass zwischen der ersten Öffnung und dem Rotorschaft ein radialer Luftspalt gebildet ist. Die Stirnfläche des Rotorschafts wirkt mit dem Absatz des ersten Jochs so zusammen, dass zwischen der Stirnfläche und dem Absatz ein axialer Luftspalt gebildet ist. Der zweite Durchmesser der zweiten Öffnung ist größer als der zweite Schaftdurchmesser, so dass zwischen der Umfangsfläche des Rotorschafts und dem zweiten Joch ein weiterer radialer Luftspalt gebildet ist. Der Permanentmagnet des Rotorschafts ist zwischen dem ersten Joch und dem zweiten Joch angeordnet, so dass er bei Bestromung der Spulen sowohl einen magnetischen Vormagnetisierungsfluss in dem axialen Luftspalt des ersten Jochs als auch in dem weiteren radialen Luftspalt des zweiten Jochs erzeugt.

Üblicherweise erzeugen aktive magnetische Radiallager bereits axiale stabilisierende Kräfte, zum Beispiel über magnetische Reluktanzkräfte, so dass ein separates axiales Stützlager in der Regel nicht erforderlich ist. Auf einen Spinnrotor wirken jedoch vielerlei Kräfte, welche bewirken können, dass der Spinnrotor aus seiner vorgesehenen Position bewegt wird. Dies ist sehr nachteilig, da durch eine Veränderung der Position des Rotortopfes des Spinnrotors, in welchem das Garn erzeugt wird, Ungleichmäßigkeiten in dem Garn entstehen können, welche sogar bis zu einem Fadenbruch führen können. Durch die Verwendung eines zusätzlichen axialen Stützlagers, zum Beispiel in Form eines aktiven Magnetlagers, wird der Spinnrotor so stark axial abgestützt, dass er die auf ihn einwirkenden axialen Kräfte kompensieren kann. Derartige axiale Kräfte, beispielsweise Druckkräfte, können beim Einspeisen von Fasern in den Rotor entstehen. Andererseits wirken Zugkräfte auf den Spinnrotor, welche z.B. durch eine Saugkraft erzeugt werden, welche in dem Rotorgehäuse, in dem der Spinnrotor rotiert, anliegt.

Die erfindungsgemäße Spinnrotor-Lagerung wirkt als Kombilager zumindest im Spinnbetrieb in axialer und radialer Richtung berührungslos. Durch die berührungslose Lagerung des Rotorschafts kann der Spinnrotor energiesparend betrieben werden. Die Lagereinheit nimmt nur wenig Bauraum ein, da sie kombiniert sowohl das axiale als auch das radiale Lager für den Rotorschaft umfasst. Sowohl axiales als auch radiales Lager wirken zusammen, sodass sie insgesamt eine optimale Abstützung des Rotorschafts während des Spinnbetriebs in axialer und auch in radialer Richtung bewirken. Eine Lageregulierung des Rotorschafts ist mit dem erfindungsgemäßen Kombilager sowohl axial als auch radial möglich.

Vorteilhaft ist es, wenn der erste Schaftdurchmesser gleich oder kleiner dem zweiten Schaftdurchmesser ist und/oder kleiner als der Durchmesser der zweiten Öffnung ist. Hierdurch ist es möglich, dass der Rotorschaft zumindest von einer Seite aus in die Lagereinheit des Kombilagers eingeführt und wieder daraus entnommen werden kann. Dies erleichtert die Montage und Demontage des Rotorschafts und führt damit zu einer kostengünstigen und wartungsfreundlichen Spinnrotor-Lagerung.

Auch ist es vorteilhaft, wenn die Stirnfläche den Rotorschaft axial abschließt oder zumindest den zweiten Durchmesser des Rotorschafts auf den ersten Schaftdurchmesser verkleinert. Wenn die Stirnfläche den Rotorschaft axial abschließt, endet der Rotorschaft an dieser Stelle. Er befindet sich damit innerhalb der Lagereinheit der Spinnrotor-Lagerung. Auch die Lagereinheit kann damit an dieser Stelle abgeschlossen sein, wodurch die Gefahr einer Verschmutzung reduziert ist. Verkleinert sich der Durchmesser des Rotorschafts an der Stirnfläche lediglich, so ist es möglich, dass der Rotorschaft durch die Lagereinheit hindurch verläuft und nach der Lagereinheit fortgesetzt ist. Damit kann die Lagereinheit am Ende des Rotorschafts oder an einer Stelle entlang des Rotorschafts angeordnet sein.

Vorteile bringt es zudem mit sich, wenn das erste Joch und das zweite Joch, insbesondere über Stege, miteinander verbunden sind. Die magnetische Vorspannung, welche die Lagereinheit auf den Rotorschaft aufbringt, kann hierdurch noch verstärkt werden.

Besonders vorteilhaft ist es auch, wenn Polschenkel des zweiten Jochs im Bereich der Öffnung für den Rotorschaft mit dünnen, beispielsweise 0,5 bis 1 mm breiten Sättigungsstegen miteinander verbunden sind. Diese Sättigungsstege, welche benachbarte Polschenkel miteinander verbinden, bewirken, dass Wirbelstromverluste im Rotor minimiert werden, da die Flussdichteverteilung im Luftspalt zwischen Stator und Welle sehr homogen wird. Die Sättigungsstege sind direkt an dem Spalt zwischen den Polschenkeln und dem in der Öffnung befindlichen Rotorschaft angeordnet. Durch die Sättigungsstege entsteht ein Hauptfluss zwischen dem Statorkreuz und dem dazwischen befindlichen Rotorschaft und nicht um den Rotorschaft herum.

Vorteile bringt es mit sich, wenn der Rotorschaft am Absatz des ersten Jochs endet. Die Lagereinheit bildet dadurch einen Abschluss der Spinnrotor-Lagerung. Sowohl für die Krafteinleitung in den Rotorschaft in axialer und radialer Richtung, als auch für den Aufbau der gesamten Baueinheit inklusive des Antriebs des Rotors und der Anordnung der Baueinheit in einer Spinneinheit einer Spinnmaschine ist dies von Vorteil. Alternativ, wenn der Rotorschaft durch das erste Joch hindurch verläuft, kann die Spinnrotor-Lagerung beispielsweise auch in der Nähe des Rotortopfes, in welchem der Faden gebildet wird, angeordnet sein. Während sich in der ersten Alternative der Antrieb des Spinnrotors zwischen der Lagereinheit und den Rotortopf befindet, ist bei dieser zweiten Alternative der Antrieb des Spinnrotors auf der Seite der Lagereinheit angeordnet, welche dem Rotortopf gegenüberliegt. Dies kann beispielsweise für die Anbringung von Sensoren zur Feststellung der aktuellen Lage des Spinnrotors von Vorteil sein.

Vorteile bringt es zudem mit sich, wenn der erste oder zweite Schaftdurchmesser des Rotorschafts mit einem mit dem Rotorschaft verbundenen Element, insbesondere dem Permanentmagnet und/oder einem Flussleitstück ausgebildet ist. Hierdurch ist der Aufbau des Rotorschafts besonders einfach zu gestalten. Der Permanentmagnet und/oder das Flussleitstück bilden den jeweils erforderlichen Schaftdurchmesser und ermöglichen damit eine konstruktiv und fertigungstechnisch einfache Gestaltung des Rotorschafts.

Vorteilhaft ist es zudem, wenn die Stirnfläche von dem mit dem Rotorschaft verbundenen Element gebildet ist. Hierdurch ist es möglich, dass die Stirnfläche aus einem für den Magnetfluss besonders günstigen Material hergestellt ist, welches sich von dem übrigen Material des Rotorschafts unterscheidet. Dadurch kann beispielsweise auf Eigenfrequenzen des Rotorschafts in Axialrichtung beim Beschleunigen des Spinnrotors besonders vorteilhaft eingewirkt werden.

Ebenso ist es vorteilhaft, wenn der Permanentmagnet in axialer Richtung magnetisiert ist und in einer zentralen Öffnung des Rotorschafts angeordnet ist oder um den Umfang des Rotorschafts herum verläuft. Durch die Anordnung des Permanentmagneten in einer zentralen Öffnung des Rotorschafts ist die Befestigung des Permanentmagneten an dem Rotorschaft besonders einfach und stabil möglich. Ist der Permanentmagnet um den Umfang des Rotorschafts herum angebracht, so ist dies bei manchen Ausführungen hinsichtlich der Anordnung der Lagereinheit in Bezug auf die axiale Position des Rotorschafts von Vorteil.

Vorteilhaft ist es zudem, wenn zumindest eine Kompensationsspule koaxial zur ersten Aktorspule, insbesondere zwischen dem ersten und dem zweiten Joch angeordnet ist, um bei geeigneter Bestromung den magnetischen Streufluss der ersten Aktorspule im radialen Luftspalt zu verringern. Dadurch kann eine bessere Entkopplung von Axialkraft- und Radialkrafterzeugung erzielt werden.

Ebenso bringt es Vorteile mit sich, wenn dem Rotorschaft ein Positionssensor zugeordnet ist zur Ermittlung der axialen und/oder radialen Position des Rotorschafts in Bezug auf die Lagereinheit. Der Positionssensor ist dabei in der Lage, die aktuelle Position des Rotorschafts zu ermitteln, indem er beispielsweise den Abstand zu einer definierten Fläche des Spinnrotors misst. Die damit erzeugten Signale können zur Regelung einer geeigneten Position des Rotorschafts durch die Lagereinheit in axialer und/oder radialer Richtung genutzt werden.

Vorteilhaft ist es, wenn der Rotorschaft mit der Lagereinheit und einem weiteren Lager, insbesondere einem radialen Magnetlager, gelagert ist. Wenn die Lagereinheit an einem Ende des Rotorschafts angeordnet ist, kann es besonders vorteilhaft sein, wenn sich an dem anderen Ende des Rotorschafts dieses weitere Lager befindet. Der Rotorschaft kann hierdurch in einer besonders stabilen Lage gelagert werden. Das weitere Lager, vorzugsweise ein radiales Magnetlager, kann aus Permanentmagneten bestehen. Üblicherweise ist es ausreichend, dass dieses weitere Lager im Gegensatz zum aktiven Lager der Kombilagereinheit ein passives Lager ist, welches versucht, den Rotorschaft an dieser Stelle möglichst konstant zu halten und zu stützen.

Eine erfindungsgemäße Lagereinheit einer Spinnrotor-Lagerung umfasst einen Stator mit einem ersten, axialen Joch und einem zweiten, radialen Joch, wobei das erste Joch eine erste Aktorspule und eine erste Öffnung mit einem ersten Durchmesser aufweist. In dieser ersten Öffnung ist ein sich radial zu einer Achse des ersten Jochs hin erstreckender Absatz angeordnet. Das zweite Joch weist zumindest zwei zweite Aktorspulen und eine zweite Öffnung mit einem zweiten Durchmesser auf. Jede der Aktorspulen befindet sich an einem Polschenkel des zweiten Jochs. Die Mittelpunkte der beiden Öffnungen sind konzentrisch zueinander ausgerichtet und definieren eine axiale Richtung, in welcher ein Rotorschaft axial ausgerichtet angeordnet werden kann. Das erste Joch und das zweite Joch sind in dieser axialen Richtung voneinander beabstandet. Die Lagereinheit bildet ein Kombilager für die radiale und axiale Lagerung eines Rotorschafts. Die Lagerung kann dabei aktiv erfolgen, d. h. die Position des Rotorschafts kann mit dieser erfindungsgemäßen Lagereinheit im Falle einer Abweichung von einer radial konzentrischen und axial verschobenen IST-Lage in eine SOLL-Lage in radialer und axialer Richtung korrigiert werden.

Ein erfindungsgemäßer Rotorschaft weist einen ersten und einen zweiten Schaftdurchmesser und mindestens einen zwischen dem ersten und zweiten Schaftdurchmesser angeordneten Permanentmagneten auf. Ausgehend von dem ersten Schaftdurchmesser des Rotorschafts weist der Rotorschaft an einer Seite des Permanentmagneten eine sich radial zu einer Achse des Rotorschafts hin erstreckende Stirnfläche auf. An der Stirnfläche kann sich der Rotor gegenüber der Lagereinheit abstützen und ist damit in der Lage nicht nur radial, sondern auch axial geregelt gelagert zu werden. Rotorschaft und Rotortopf bilden den Rotor, mit dem ein Faden gesponnen wird. Der Rotorschaft wird im Betrieb von einem Rotorantrieb angetrieben. Der Rotorschaft ist dabei Teil eines Läufers des Rotorantriebs, der mit einer Spule des Rotorantriebs, welche stationär um den Rotorschaft herum angeordnet ist, zusammenwirkt.

Vorteilhaft ist es zudem, wenn an einem Ende des Rotorschafts ein Rotortopf angeordnet ist. Der Rotorschaft und der Rotortopf bilden gemeinsam einen Spinnrotor für eine Offenend-Rotorspinnmaschine. In den Rotortopf werden Fasern eingespeist und durch eine Drehung des Spinnrotors mit hoher Geschwindigkeit an eine Innenwand des Rotortopfs gedrückt. Beim Abziehen der Fasern aus dem Rotortopf wird in dem dabei erzeugten Faserverband eine Drehung erzeugt, wodurch aus den Fasern ein Garn gebildet wird.

Ebenso bringt es Vorteile mit sich, wenn der Permanentmagnet an einem der Enden des Rotorschafts angeordnet ist. Der Permanentmagnet lässt sich an dieser Stelle besonders vorteilhaft mit dem Rotorschaft verbinden. So ist es beispielsweise möglich, dass der Permanentmagnet in eine zentrale Aussparung des Rotorschafts eingefügt und dort beispielsweise durch eine Presspassung oder eine Verklebung befestigt ist.

In dieser Beschreibung wird eine Vorrichtung zur Lagerung eines Rotorschafts beschrieben. Gemäß einem Beispiel umfasst die Vorrichtung mindestens einen Permanentmagneten, der mit dem Rotorschaft verbunden ist und folglich mit diesem mitrotieren kann, und einen Stator mit einem ersten und einem zweiten Joch. Das erste und das zweite Joch sind aus weichmagnetischem Material hergestellt. Das erste Joch weist eine Öffnung auf, in die der Rotorschaft eingeführt ist, sodass zwischen dem ersten Joch und einer Stirnfläche des Rotorschafts, oder eines damit verbundenen Elements, ein axialer Luftspalt gebildet wird. Gleichzeitig ist das erste, axiale Joch derart geformt, dass zwischen dem ersten Joch und einer Umfangsfläche des Rotorschafts ein erster radialer Luftspalt gebildet wird. Das zweite, radiale Joch ist derart angeordnet, dass zwischen der Umfangsfläche des Rotorschafts und dem zweiten Joch ein zweiter radialer Luftspalt gebildet wird. Die Vorrichtung umfasst weiter eine erste Aktorspule, die an dem ersten Joch angeordnet ist sowie zwei oder mehr zweite Aktorspulen, die an dem zweiten Joch angeordnet sind. Der Permanentmagnet ist relativ zu dem ersten und dem zweiten Joch so positioniert, dass er sowohl einen magnetischen Vormagnetisierungsfluss (*magnetic bias flux*) in dem axialen Luftspalt als auch in dem zweiten radialen Luftspalt erzeugt.

Durch die Positionierung des Permanentmagneten an dem Rotorschaft kann eine axiale Kraft in beide Richtungen erzeugt werden, obwohl Rotorschaft und Stator keine Hinterschneidung aufweisen.

Die Vorrichtungen sind gemäß der vorangegangenen Beschreibung ausgebildet, wobei die genannten Merkmale einzeln oder in beliebiger Kombination vorhanden sein können.

Verschiedene Ausführungsbeispiele werden nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die den dargestellten Ausführungsbeispielen zugrunde liegenden Prinzipien darzustellen.

Weitere als die zuvor beschriebenen Vorteile der Erfindung sind in den nachfolgenden Ausführungsbeispielen dargestellt. Es zeigt:
- **Figur 1**: eine perspektivische Darstellung eines Beispiels einer erfindungsgemäßen Lagereinheit eines Kombilagers,
- **Figur 2**: eine Querschnittsdarstellung der erfindungsgemäßen Lagereinheit des Kombilagers der Figur 1,
- **Figur 3**: Magnetfeldlinien für die Vorrichtung aus Fig. 2,
- **Figur 4**: eine Kraftwirkung des Spulenstroms in einer axialen Aktorspule der erfindungsgemäßen Lagereinheit des Kombilagers der Figur 1,
- **Figur 5**: eine Kraftwirkung des Spulenstroms in den radialen Aktorspulen der erfindungsgemäßen Lagereinheit des Kombilagers der Figur 1,
- **Figur 6**: eine Querschnittsdarstellung eines weiteren Ausführungsbeispiels einer erfindungsgemäßen Lagereinheit eines Kombilagers,
- **Figur 7**: ein weiteres Beispiel einer erfindungsgemäßen Lagereinheit eines Kombilagers mit einer zusätzlichen Kompensationsspule,
- **Figur 8**: einen Spinnrotor mit einer Querschnittsdarstellung einer erfindungsgemäßen Lagereinheit eines Kombilagers und
- **Figur 9**: ein weiteres Beispiel eines Spinnrotors mit einer Querschnittsdarstellung einer erfindungsgemäßen Lagereinheit eines Kombilagers.

Bei der nachfolgenden Beschreibung der in den Figuren dargestellten alternativen Ausführungsbeispiele werden für Merkmale, die im Vergleich zu den zuvor beschriebenen Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale. Aus Übersichtlichkeitsgründen kann es sein, dass nicht alle gleichen Teile mit Bezugszeichen versehen, aber gleichartig gezeichnet sind. Aus Gründen der besseren Übersichtlichkeit ist der Rotorschaft in einigen der Figuren nur im Bereich der Lagereinheit des Kombilagers dargestellt.

Ein Magnetlager gemäß den hier beschriebenen Ausführungsbeispielen kann einen Läufer (z.B. eines Elektromotors) berührungsfrei lagern, indem Lagerkräfte (elektromagnetische Kräfte) sowohl in radialer Richtung als auch in axialer Richtung erzeugt werden. Zusammen mit einem weiteren, berührungslosen Lager ist es dadurch möglich, den Läufer vollständig berührungslos zu lagern. Der Läufer ist gemäß der vorliegenden Erfindung ein Rotorschaft 10 eines Spinnrotors 2. Eine derartige Kombination aus Axiallager und Radiallager wird im Folgenden auch als Kombilager (kombiniertes Axial-/Radiallager) bezeichnet. Die axiale Richtung ist durch die Lage der Drehachse des Rotorschafts bestimmt und in dieser Beschreibung als z-Richtung definiert. Diese bildet zusammen mit der x-Richtung und y-Richtung ein kartesisches Koordinatensystem. Eine radiale Lagerkraft liegt folglich in der xy-Ebene.

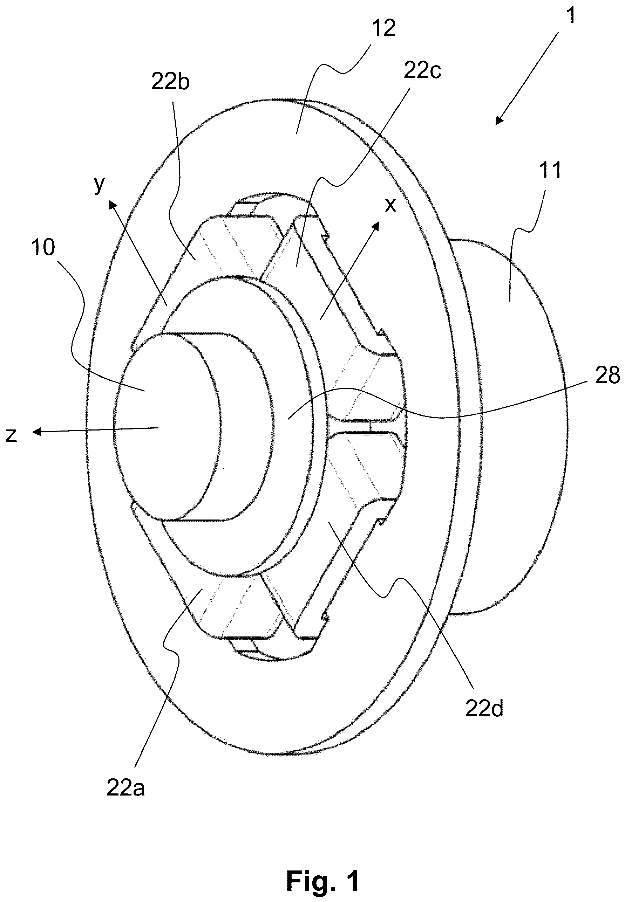

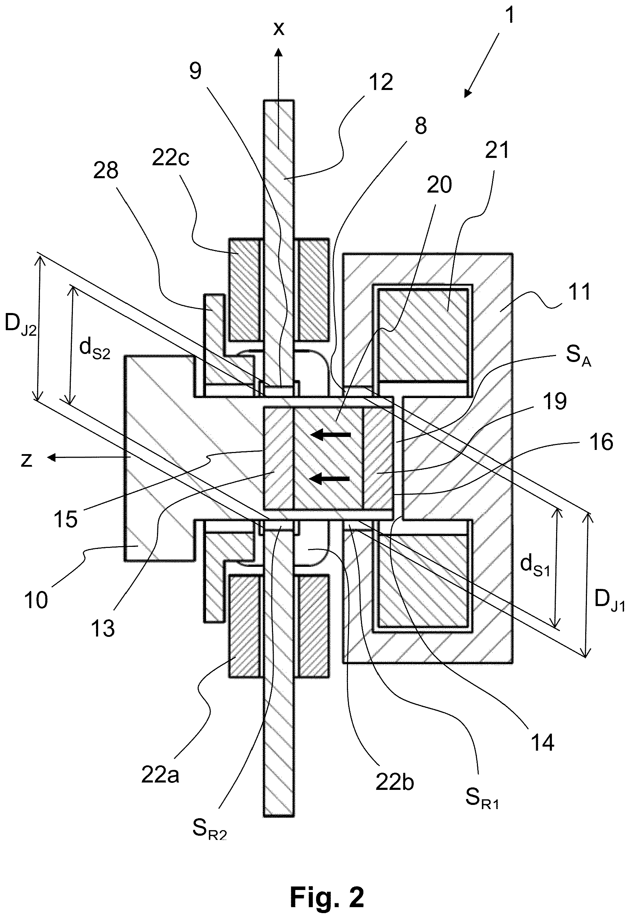

Ein erstes Ausführungsbeispiel einer Lagereinheit 1 eines Kombilagers ist in Fig. 1 und 2 dargestellt, wobei Fig. 1 eine perspektivische Darstellung und Fig. 2 ein zugehöriger Querschnitt durch die xz-Ebene ist. Die in Fig. 1 und 2 dargestellte Vorrichtung umfasst einen die Lagereinheit 1 bildenden Stator und einen als Läufer ausgebildeten Rotorschaft 10. Der Stator kann an oder in einem Gehäuse 29 in einer Spinnstelle einer Rotorspinnvorrichtung angeordnet sein. Der Rotorschaft 10 kann z.B. die Motorwelle eines Elektromotors sein, mit dem der Spinnrotor 2 angetrieben wird. Der Stator umfasst sämtliche nicht-rotierenden Teile, die der Erzeugung und Führung des magnetischen Flusses dienen. Gleichermaßen umfasst der Läufer den rotierenden Rotorschaft 10 als solchen und jene damit verbundenen Teile, die der Erzeugung und Führung des magnetischen Flusses dienen und die mit dem Rotorschaft 10 mitrotieren.

Die Spinnrotor-Lagerung, welche das Kombilager 1 und den Rotorschaft 10 umfasst, weist mindestens einen Permanentmagneten 20 auf, der in oder an dem Rotorschaft 10 montiert ist und mit diesem mitrotiert. Der Permanentmagnet 20 wird daher auch als Rotormagnet bezeichnet. In dem in Fig. 2 dargestellten Beispiel ist der Permanentmagnet 20 in einer zentralen Öffnung 15, z.B. koaxial zur Drehachse, am Wellenende des Rotorschafts 10 angeordnet. Der Rotorschaft 10 selbst ist vorzugsweise, jedoch nicht zwangsläufig, aus nicht ferromagnetischen Material, beispielsweise aus Edelstahl, aus Kunststoff oder aus einem anderen Material mit geringer magnetischer Leitfähigkeit. Der Rotorschaft 10 kann in manchen Anwendungen als Hohlwelle ausgeführt sein. Der Permanentmagnet 20 kann in axialer Richtung magnetisiert sein. In Fig. 2 ist die Magnetisierung des Permanentmagneten 20 durch Pfeile symbolisiert.

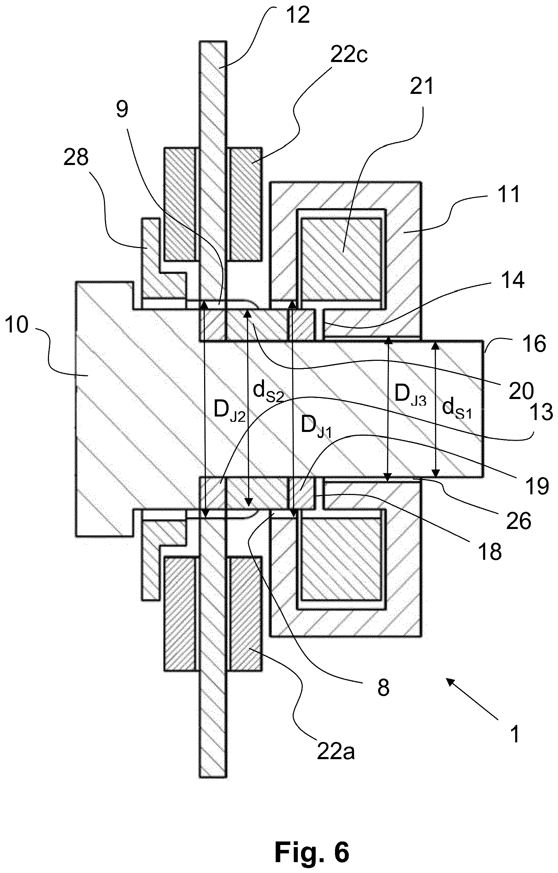

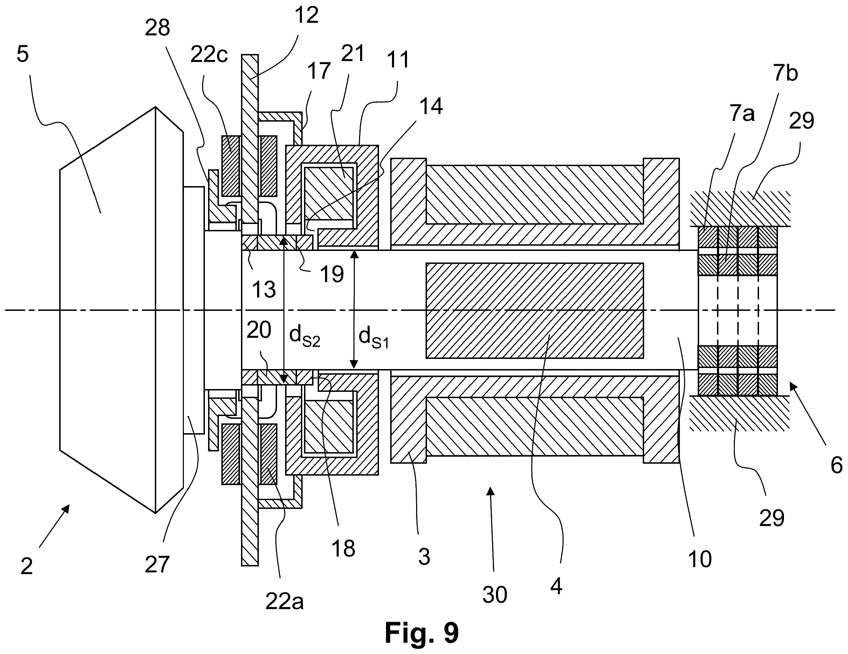

Gemäß Fig. 2 ist der Permanentmagnet 20 am Wellenende des Rotorschafts 10 angeordnet. In anderen Ausführungsbeispielen kann der Permanentmagnet 20 auch an einer beliebigen axialen Position (z-Koordinate) des Rotorschafts 10 angeordnet sein (siehe auch Fig. 6 oder 9). In dem in Fig. 2 darstellten Beispiel ist in axialer Richtung neben dem Permanentmagnet 20 ein Flusskonzentrator 13, auch Flussleitstück genannt, angeordnet. Der Flusskonzentrator 13 ist aus weichmagnetischem Material und dient der Führung des magnetischen Flusses, der lokal im Wesentlichen auf den Flusskonzentrator 13 beschränkt ist. Optional kann die zentrale Öffnung 15, beispielsweise eine Bohrung, am Wellenende ein weiteres Flussleitstück 19 aufweisen, welches eine Abdeckung für die zentrale Öffnung 15 bilden kann. Das Flussleitstück 19 kann ebenfalls aus weichmagnetischem Material bestehen. Die Abdeckung der zentralen Öffnung 15 kann aber auch entfallen oder aus einem anderen Material hergestellt sein.

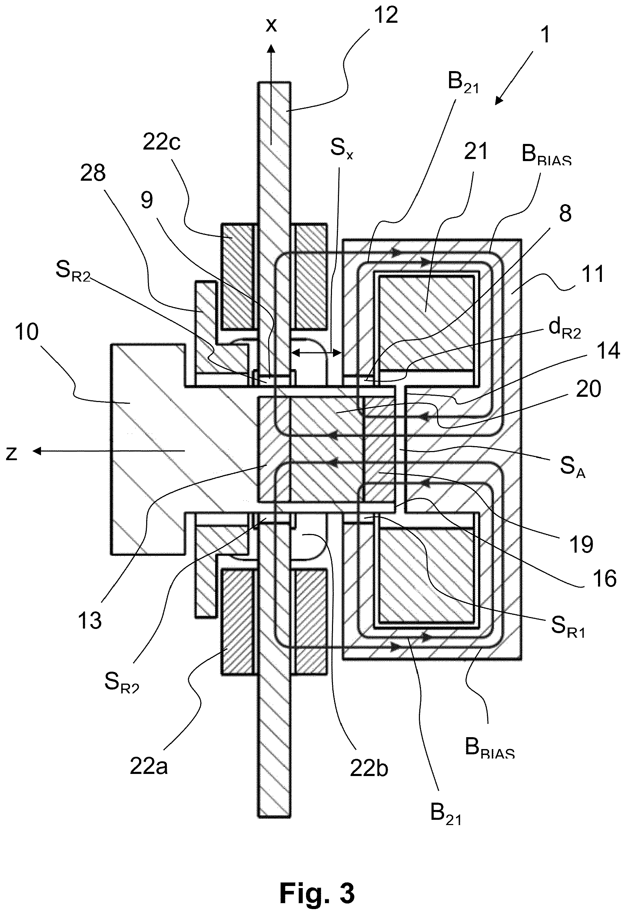

Die Lagereinheit 1 umfasst zwei weichmagnetische Elemente. Eines dieser weichmagnetischen Elemente wird im Folgenden als radiales Joch 12 oder als zweites Joch 12 bezeichnet, weil es den magnetischen Fluss in radialer Richtung leitet. Das radiale Joch 12 kann ein im Wesentlichen scheibenförmiges Element sein, welches sich in radialer Richtung, d.h. in oder parallel zu der xy-Ebene, ausdehnt. Die axiale Position, d.h. die z-Koordinate, des radialen Jochs 12 entspricht grob der axialen Position des Flusskonzentrators 13 oder der axialen Position eines Endes des Permanentmagneten 20. In manchen Ausführungsbeispielen kann der Flusskonzentrator 13 auch weggelassen werden, was jedoch einen höheren magnetischen Streufluss zur Folge haben kann. In Fig. 2 liegt das radiale, zweite Joch 12 in Bezug auf die z-Richtung neben dem Permanentmagneten 20. Im Allgemeinen ist ein Joch Teil einer magnetischen Flussführung (magnetischer Kreis, *magnetic circuit*), und somit ist das radiale Joch 12 aus weichmagnetischem Material. Zwischen dem Flusskonzentrator 13 und dem radialen Joch 12 befindet sich ein radialer Luftspalt S_{R2} (vgl. auch Fig. 3), d.h. die Magnetfeldlinien verlaufen im Wesentlichen in radialer Richtung durch den Luftspalt S_{R2}. Der Begriff Luftspalt impliziert in der Regel nicht, dass sich in dem Spalt ausschließlich Luft befindet, sondern lediglich, dass sich in dem Spalt unmagnetisches Material befindet. Im vorliegenden Ausführungsbeispiel befindet sich dementsprechend außer Luft auch Material des Rotorschafts 10, insbesondere die Wandung der Öffnung 15.

Das andere der weichmagnetischen Elemente wird als axiales, auch erstes Joch 11 bezeichnet. Dieses befindet sich in dem in Fig. 2 dargestellten Beispiel entlang der z-Richtung neben dem Permanentmagneten 20, jedoch an der dem radialen, zweiten Joch 12 gegenüberliegenden Seite des Permanentmagneten 20. Das axiale, erste Joch 11 dient ebenfalls der Flussführung und kann beispielsweise eine ähnliche Form aufweisen wie ein Topfmagnet. In dem dargestellten Beispiel hat das axiale Joch 11 eine im Wesentlichen zylindrische Form, wobei der Rotorschaft 10 mit einem Ende in diese zylindrische Form eingeführt ist, sodass zwischen einer Stirnseite 16 des Rotorschafts 10, welche eine Stirnfläche 18 für einen Absatz 14 des ersten Jochs 11 bildet, und dem axialen Joch 11 ein kleiner axialer Luftspalt S_{A} gebildet wird. In dem axialen Luftspalt S_{A} verlaufen die Magnetfeldlinien im Wesentlichen in axialer Richtung zwischen dem Rotorschaft 10 und dem axialen Joch 11. Zwischen dem Umfang des Rotorschafts 10 und dem Joch 11 wird ein weiterer radialer Luftspalt S_{R1} gebildet (vgl. Fig. 3), der einen magnetischen Rückschluss ermöglicht.

Der Rotormagnet bzw. Permanentmagnet 20 erzeugt ein Magnetfeld und einen entsprechenden magnetischen Fluss B_{BIAS} durch das axiale Joch 11, das radiale Joch 12 und die Luftspalte S_{R2}, S_{A} und Sx. In dem dargestellten Beispiel befindet sich der Luftspalt Sx in axialer z-Richtung zwischen dem axialen Joch 11 und dem radialen Joch 12 und ist deutlich größer als die anderen Luftspalte und kann somit einen gewissen Streufluss zur Folge haben (siehe Fig. 3). Dieser vom Rotormagnet bzw. Permanentmagnet 20 erzeugte magnetische Fluss B_{BIAS} wird auch als magnetische Vorspannung (*magnetic bias*) oder Vormagnetisierungsfluss (*bias flux*) bezeichnet. Auf den Verlauf der Magnetfeldlinien wird später noch genauer eingegangen. Der Luftspalt Sx zwischen dem axialen Joch 11 und dem radialen Joch 12 kann in manchen Ausführungsbeispielen auch durch ferromagnetische Stege 17 überbrückt werden, wie sie in Figur 9 dargestellt sind.

Für die Erzeugung einer Axialkraft weist der Stator des Magnetlagers mindestens eine zur Drehachse (z-Achse) des Rotorschafts 10 koaxiale Spule 21 auf, die im Weiteren auch als "axiale Aktorspule" bezeichnet wird. Die axiale Aktorspule 21 kann im Inneren des topfförmigen axialen Jochs 11 angeordnet sein, ähnlich wie bei einem Topfmagnet (Elektromagnet). Allgemeiner ausgedrückt, die axiale Aktorspule 21 ist von einem weichmagnetischen Element, nämlich dem Joch 11, welches als Führung für den magnetischen Fluss dient und welches einen axialen Luftspalt S_{A} zur Stirnseite 16 des Rotorschafts 10 sowie einen radialen Luftspalt S_{R1} zum Umfang des Rotorschafts 10 hin bildet. Der im axialen Luftspalt S_{A} wirksame magnetische Fluss (Summenfluss) entsteht durch Überlagerung des von dem Permanentmagnet 20 verursachten Vormagnetisierungsflusses B_{BIAS} und des magnetischen Flusses B₂₁ zufolge der axialen Aktorspule 21. Je nach Stromrichtung in der Spule 21 wird der vom Permanentmagneten 20 erzeugte Vormagnetisierungsfluss B_{BIAS} im axialen Luftspalt S_{A} entweder verstärkt oder abgeschwächt. Gemäß den hier erläuterten Ausführungsbeispielen ist es sogar möglich, dass die axiale Kraft zwischen Joch 11 (Teil des Stators) und Rotorschaft 10 ihre Richtung ändert, d.h. von anziehend, in negativer z-Richtung, auf abstoßend, in positiver z-Richtung, und vice versa.

Die Vorrichtung umfasst weiter eine Sensoreinrichtung (siehe Fig. 1-3) mit einem oder mehreren Positionssensoren 28 für die Messung der axialen und der radialen Position des Rotorschafts 10 sowie eine zugehörige Steuerelektronik, welche abhängig von der gemessenen Position des Rotorschafts 10 die Ströme durch die axiale Aktorspule 21 und die radialen Aktorspulen 22a-d einstellt. Das Gesamtsystem aus Stator und Läufer sowie Steuerelektronik des Magnetlagers kann somit den Rotorschaft 10 an einer gewünschten axialen Position halten. Auf die Sensoreinrichtung und die Steuerelektronik wird später noch genauer eingegangen.

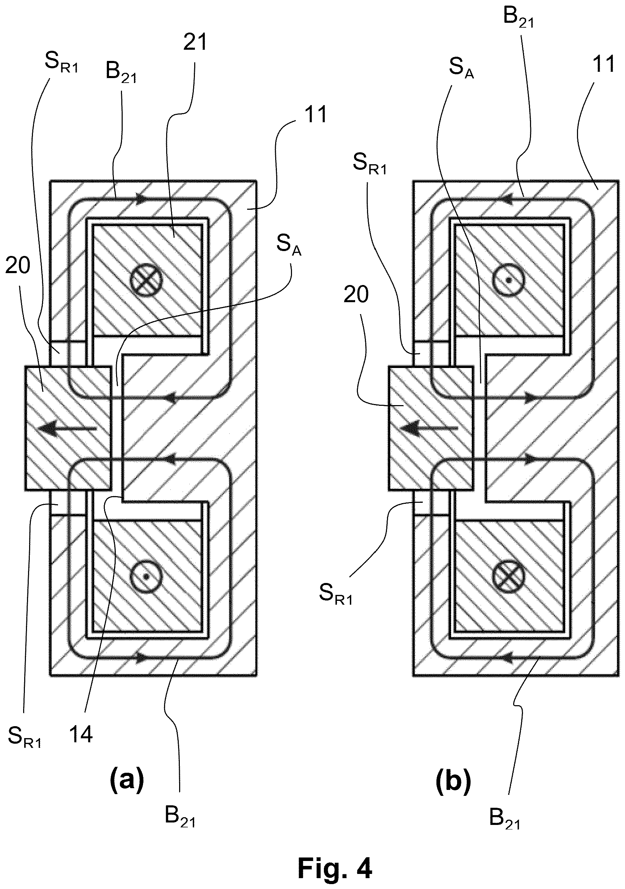

Wie erwähnt und beispielsweise aus Figur 3 ersichtlich, wird durch den Permanentmagnet 20 der axiale Luftspalt S_{A} mit einem magnetischen Fluss B_{BIAS} vorgespannt (biased), weshalb dieser magnetische Fluss B_{BIAS} auch als Vormagnetisierungsfluss bezeichnet wird. Wenn kein Strom durch die axiale Aktorspule 21 fließt, wirkt üblicherweise eine Axialkraft in die negative z-Richtung auf den Rotorschaft 10 und bildet damit eine axiale Vorspannkraft. Diese Kraft zufolge des Vormagnetisierungsflusses B_{BIAS} kann beispielsweise durch Bestromen der Aktorspule 21 kompensiert werden, wodurch die Aktorspule 21 den mit B₂₁ bezeichneten magnetischen Fluss erzeugt. Der Fluss B₂₁ kann den Vormagnetisierungsflusses B_{BIAS} teilweise kompensieren, vollständig kompensieren oder auch überkompensieren. In der in In Figur 3 in Verbindung mit Fig. 4, Darstellung (a), gezeigten Situation überlagern sich der Vormagnetisierungsfluss B_{BIAS} und der magnetische Fluss B₂₁ konstruktiv (Spulenstrom positiv, Fluss B₂₁ in z-Richtung), wohingegen sich in der in Fig. 4, Darstellung (b) gezeigten Situation der Vormagnetisierungsfluss B_{BIAS} und der magnetische Fluss B₂₁ einander destruktiv überlagern (Spulenstrom negativ, Fluss B₂₁ gegen die z-Richtung).

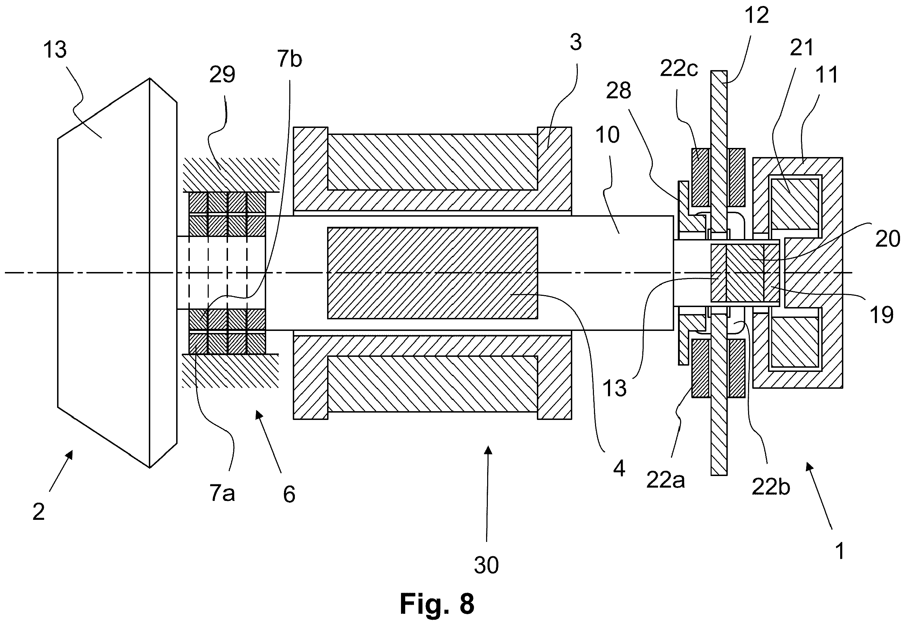

Bei vollständiger Kompensation (B_{BIAS}+B₂₁=0) ist die axiale (Netto-) Kraft null und der Rotorschaft 10 befindet sich in seiner axialen Soll-Position. Um den Energieverbrauch zu verringern, kann es jedoch nützlich sein, die axiale Vorspannkraft durch ein weiteres Lager (siehe Figur 8 und 9) zu kompensieren. Bei diesem weiteren Lager kann es sich zum Beispiel um ein passives Magnetlager 6 handeln. Es ist jedoch ebenfalls möglich, ein zweites Kombilager oder ein anderes Lager einzusetzen, das eine etwa gleich große, jedoch in entgegengesetzter Richtung (d.h. in z-Richtung) auf den Rotorschaft 10 wirkende axiale Vorspannkraft erzeugt. In diesem Fall genügt ein relativ kleiner Strom durch die axiale Aktorspule 21, um den Rotorschaft 10 in seiner kräftefreien (Soll-) Position zu halten.

Wie erwähnt wird die axiale Position des Rotorschafts 10 dabei laufend von der Sensoreinrichtung mit ihren Positionssensoren 28 erfasst. Die Steuerelektronik ist dazu ausgebildet, den Strom durch die axialen Aktorspule 21 derart einzustellen, dass der Rotorschaft 10 immer in seine kräftefreie Position zurückgeholt oder in dieser gehalten wird (Positionsregelung). In dieser Situation schwankt der Strom während des Betriebs der des Magnetlagers somit um null Ampere. Wird die axiale Vorspannkraft nicht oder nicht vollständig wie oben erwähnt durch ein weiteres Lager kompensiert, dann schwankt der Strom der axialen Aktorspule 21 im Betrieb um einen bestimmten Nennstrom.

Zur Verringerung von Wirbelstromverlusten können in manchen Ausführungsbeispielen die weichmagnetischen, den Magnetfluss leitenden Elemente, nämlich das radiale, zweite Joch 12 und das axiale, erste Joch 11, auch aus einem laminierten Blechstapel oder beispielsweise aus einem weichmagnetischen Verbundwerkstoff (*soft magnetic composite*) gefertigt sein.

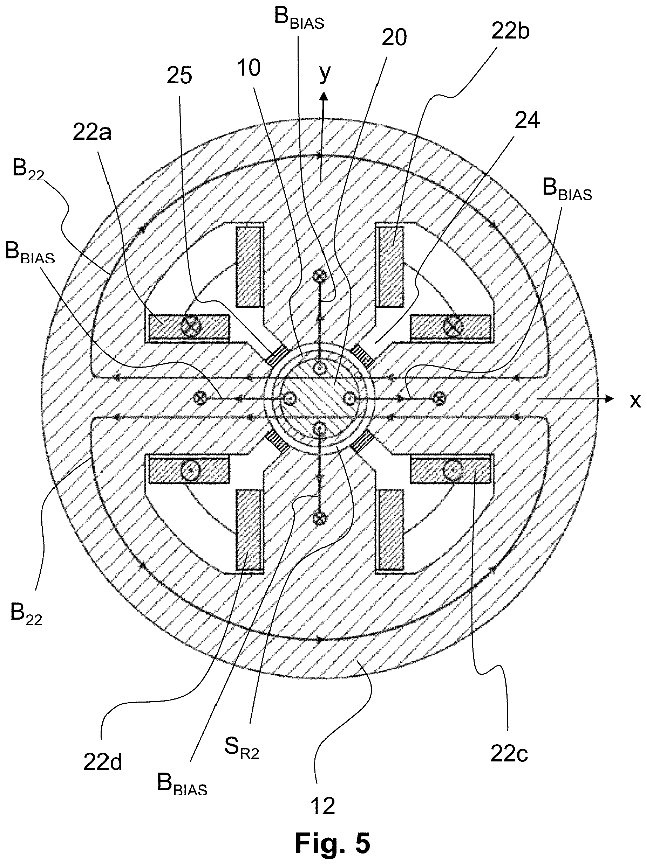

Für die Erzeugung von radialen Lagerkräften sind auf dem radialen Joch 12 mindestens zwei, insbesondere aber drei oder vier Aktorspulen 22a-d vorgesehen, die hier als radiale Aktorspulen 22a-d bezeichnet werden. In den dargestellten Ausführungsbeispielen sind vier Aktorspulen 22a-d magnetisch mit dem radialen Joch 12 gekoppelt. Mit geeigneter Bestromung der radialen Aktorspulen 22a-d kann eine Kraft in beliebiger, radialer Richtung in der xy-Ebene erzeugt werden, wie dies auch in der Schnittdarstellung in Fig. 5 dargestellt ist. Der Permanentmagnet 20 erzeugt in dem radialen Luftspalt S_{R2} wie erwähnt den Vormagnetisierungsfluss B_{BIAS}, der von dem Magnetfluss B₂₂, der von den Spulen 22a-d erzeugt wird, je nach Stromrichtung konstruktiv oder destruktiv, überlagert wird.

Der Rotorschaft 10 weist im Bereich des ersten, axialen Jochs 11 einen ersten Schaftdurchmesser dₛ₁ und im Bereich des zweiten, radialen Jochs 12 einen zweiten Schaftdurchmesser dₛ₂ auf. Der Permanentmagnet 20 ist zwischen den beiden Schaftdurchmessern dₛ₁ und dₛ₂ angeordnet. Die Stirnseite 16 des Rotorschaft 10 schließt sich an den ersten Schaftdurchmesser dₛ₁ an und erstreckt sich radial zu der Achse in z-Richtung und damit der Achse des Rotorschafts 10. Das erste, axiale Joch 11 weist eine erste Öffnung 8 mit einem ersten Durchmesser D_{J1} auf, in welcher ein sich radial zur einer in z-Richtung befindliche Achse des ersten Jochs 11 hin erstreckender Absatz 14 angeordnet ist. Das zweite Joch 12 weist eine zweite Öffnung 9 der Lagereinheit 1 mit einem zweiten Durchmesser D_{J2} auf. Das erste Joch 11 und das zweite Joch 12 sind in axialer Richtung des Rotorschafts 10 mit einem Abstand Sₓ (siehe Fig. 3) voneinander beabstandet.

Bei einer Anordnung des Rotorschafts 10 in der Lagereinheit 1 im Betrieb der Lagerung, das heißt in einer Position des Rotorschafts 10 in der Lagereinheit 1, in der der Rotorschaft 10 betriebsmäßig gelagert ist, ist der erste Durchmesser D_{J1} der ersten Öffnung 8 größer als der erste Schaftdurchmesser dₛ₁. Hierdurch wird zwischen der ersten Öffnung 8 und dem Rotorschaft 10 ein radialer Luftspalt S_{R1} (siehe Fig. 3) gebildet. Die Stirnseite 16 des Rotorschafts 10 wirkt mit dem Absatz 14 des ersten Jochs 11 so zusammen, dass zwischen der Stirnseite 16 und dem Absatz 8 der axiale Luftspalt S_{A} gebildet ist. Der zweite Durchmesser D_{J2} der zweiten Öffnung 9 ist größer als der zweite Schaftdurchmesser dₛ₂, so dass zwischen der Umfangsfläche des Rotorschafts 10 und dem zweiten Joch 12 der weitere radiale Luftspalt S_{R2} gebildet ist.

Wie aus der Darstellung der Figur 2 zu entnehmen ist, ist bei diesem Ausführungsbeispiel der erste Schaftdurchmesser dₛ₁ gleich dem zweiten Schaftdurchmesser dₛ₂. Damit ist es möglich, dass der Rotorschaft 10 aus der Lagereinheit 1 in positiver z-Richtung entnommen werden kann, da keine Hinterschneidung des Rotorschafts 10 mit der Lagereinheit 1 in dieser Richtung vorhanden ist. Die Möglichkeit einer Entnahme des Rotorschafts 10 aus der Lagereinheit 1 ist wichtig für eine einfache und kostengünstige Montage und Demontage der Spinnrotor-Lagerung. Diese Entnahmemöglichkeit besteht auch, wenn der erste Schaftdurchmesser dₛ₁ kleiner als der zweite Schaftdurchmesser dₛ₂ und insbesondere kleiner als der Durchmesser D_{J2} der zweiten Öffnung 9 am radialen Joch 12 ist (siehe Figur 6).

Das in Fig. 3 gezeigte Beispiel zeigt denselben Querschnitt wie Fig. 2, wobei in Fig. 3 die magnetisch relevanten Luftspalte S_{R2}, S_{R1}, S_{A} und Sx, sowie die Magnetfeldlinien B_{BIAS} des vom Rotormagnet 20 erzeugten Vormagnetisierungsflusses und des von der Spule 21, erzeugten Magnetflusses dargestellt sind. Der Flussverlauf im radialen Joch 12, insbesondere der in Fig. 3 nicht enthaltene Magnetfluss der Aktorspulen 22a-d ist in Fig. 5 schematisch dargestellt. Der vom Permanentmagnet 20 erzeugte Vormagnetisierungsfluss ist in Fig. 3-5 mit B_{BIAS} bezeichnet. Die diesbezüglichen Magnetfeldlinien verlaufen vom Permanentmagnet 20, durch den radialen Luftspalt S_{R2}, das radiale Joch 12, den Luftspalt Sx (ggf. Streufluss), das axiale Joch 11 und den axialen Luftspalt S_{A} zurück zum Permanentmagnet 20. In Fig. 5 wird wie üblich das Symbol ⊙ für aus der Zeichenebene herauskommende Feldlinien und das ⊗ für in die Zeichenebene hinein verlaufende Feldlinien verwendet. Analoges gilt für die Stromrichtung durch die Spulen (siehe z.B. Fig. 4).

Der von der axialen Aktorspule 21 erzeugte magnetische Fluss ist mit B₂₁ bezeichnet. Die diesbezüglichen Magnetfeldlinien verlaufen entlang der z-Richtung durch die Spule 21 hindurch, über die Luftspalte S_{A} und S_{R1}, und das Joch 12. Der von den radialen Aktorspulen 22a-d erzeugte magnetische Fluss B₂₂ ist wie erwähnt in Fig. 5 dargestellt. Dieser verläuft jedoch im Wesentlichen durch das radiale Joch 12 und den Luftspalt SR2, in dem sich die Magnetflüsse B_{BIAS} und B₂₂ überlagern (Summenfluss B₂₂+B_{BIAS}). In ähnlicher Weise überlagern sich die Magnetflüsse B_{BIAS} und B₂₁ im Luftspalt d_{A} (Summenfluss B₂₁+B_{BIAS}). Man sieht in Fig. 3, dass der Permanentmagnet 20 sowohl im radialen Luftspalt SR2 als auch im axialen Luftspalt S_{A} einen Vormagnetisierungsfluss B_{BIAS} erzeugt.

In dem in Fig. 3 und 4 (Darstellung (a)) dargestellten Fall verstärkt die axiale Aktorspule 21 den Fluss B_{BIAS} des Permanentmagneten 20, wodurch die entgegen der z-Richtung ziehende Kraft auf den Rotorschaft 10 erhöht wird. Durch Änderung der Stromrichtung in der Spule 21 wirkt der von der Spule 21 erzeugte Fluss B₂₁ dem Fluss B_{BIAS} des Permanentmagneten 20 entgegen, wodurch die nach unten ziehende Kraft verringert wird (siehe Fig. 4, Darstellung (b) mit jeweils entgegengesetzter Stromrichtung). Mit der dargestellten Vorrichtung ist es - bei entsprechender Auslegung - sogar möglich, eine Kraft zu erzeugen, die den Rotorschaft 10 in z-Richtung bewegt.

In den dargestellten Beispielen sind vier radiale Aktorspulen 22a-d vorgesehen. Grundsätzlich können auch zwei oder drei Spulen ausreichend sein. In Fig. 5 wirkt durch Bestromung der Spulen 22a und 22c eine Kraft nach links, in negative x-Richtung auf den Rotorschaft 10. Man erkennt, dass sich im linken Bereich des ringförmigen Luftspaltes S_{R2} der resultierende Magnetfluss im Vergleich zur Vorspannung erhöht und im rechten Bereich des Luftspaltes S_{R2} der resultierende Magnetfluss im Vergleich zur Vorspannung verringert. Wird die Stromrichtung in den Spulen 22a und 22c umgedreht, wird entsprechend eine Kraft in positive x-Richtung erzeugt. Die beiden anderen radialen Aktorspulen 22b und 22d bleiben in diesem theoretischen Fall stromlos, da sie nur für die Erzeugung von Kräften in y-Richtung benötigt werden.

Befindet sich der Rotorschaft 10 an seiner Sollposition, also in der Darstellung aus Fig. 2 bei x=0 und y=0, dann heben sich die radialen Kräfte aufgrund der magnetischen Vorspannung auf. Dies bedeutet, dass die radialen Aktorspulen 22a-d im Mittel mit einem Strom von null Ampere betrieben werden können, der Energieverbrauch ist also relativ klein.

Das dargestellte magnetisch leitende radiale Joch 12 ist in den hier beschriebenen Beispielen an vier Polschenkeln mit jeweils einer von vier Spulen 22a-d bewickelt. Nuten 24 zwischen den Polschenkeln des Jochs 12 gemäß Fig. 5 können zu einem Wechselfluss-Anteil in der Bandage des Rotorschafts 10 führen. Um die Wirbelstromverluste in einer elektrisch leitfähigen Rotor-Bandage zu verringern, können diese Nuten 24 auch über dünne Stege 25, sogenannte Sättigungsstege, verbunden sein.

Um den Rotorschaft 10 radial zu zentrieren, wird neben der axialen Position (z-Koordinate) auch die radiale Position des Rotorschafts 10 (x- und y-Koordinaten) von der oben erwähnten Sensoreinrichtung mit ihren Positionssensoren 28 laufend gemessen. Die aktuelle Position des Rotorschafts 10 wird von der Steuerelektronik aus den Sensorsignalen ermittelt. Die Steuerelektronik enthält weiter eine Positionsregelung, welche die gemessene Position (x, y, z) des Rotorschafts 10 mit der Soll-Position, z.B. (0, 0, 0) vergleicht und die Ströme durch die Aktorspulen 21 und 22a-d so einstellt, dass die resultierenden magnetischen Kräfte im Luftspalt S_{A} und S_{R2} einer eventuell vorhandenen Abweichung von der Soll-Position entgegenwirken. Zu diesem Zweck kann die Steuerelektronik eine geeignete Leistungs-Ausgangsstufe (z.B. aus (MOS-) Transistoren) aufweisen. Geeignete Steuerelektronik ist an sich bekannt und wird daher hier nicht weiter erläutert.

In den bisher beschriebenen Beispielen ist ein Wellenende des Rotorschafts 10 in das ähnlich wie ein Topfmagnet gestaltete axiale, erste Joch 11 eingeführt. Das ist jedoch nicht notwendigerweise der Fall. In dem in Fig. 6 dargestellten Beispiel verläuft der Rotorschaft 10 durch das axiale Joch 11 hindurch. Der Permanentmagnet 20 kann in diesem Beispiel außen am Umfang des Rotorschafts 10 ringförmig angeordnet sein. Gleiches gilt für die optionalen Flussleitstücke 13 und 19. Der Verlauf der magnetischen Feldlinien und des magnetischen Flusses (Vorspannfluss B_{BIAS}, sowie die magnetischen Flüsse der Spulen B₂₁ und B₂₂) unterscheiden sich nicht wesentlich von dem vorherigen Beispiel, und es wird auf die obigen Erläuterungen insbesondere zu Fig. 4 und 5 verwiesen. Der axiale Luftspalt S_{A} liegt in diesem Beispiel nicht zwischen dem axialen Joch 11 und der Stirnseite 16 des Rotorschafts 10, sondern zwischen dem axialen Joch 11 und einer Stirnfläche 18 eines Wellenabsatzes, einer Wellenschulter oder eines mit dem Rotorschaft 10 verbundenen Teils wie z.B. dem Flussleitstück 19 oder dem Permanentmagnet 20.

In den bisher beschriebenen Beispielen ist der Rotormagnet 20 in axialer Richtung magnetisiert. Insbesondere in dem Beispiel aus Fig. 6 könnte der Permanentmagnet 20 auch als in radialer Richtung magnetisierter Ring ausgebildet sein. In diesem Fall würde der Permanentmagnet 20 an der Stelle des Flussleitstücks 13 angeordnet sein, welches in diesem Fall nicht mehr benötigt würde. Der Permanentmagnet 20 muss auch nicht notwendigerweise eine zylindrische Form oder eine Ringform haben. Es genügt, wenn die Flussleitstücke 13 und 19 an die Form der Joche 11 und 12 bzw. die Form der Luftspalte S_{R1}, S_{R2}, S_{A} und Sx angepasst sind. Der Rotorschaft 10 weist damit in den Bereich des Positionssensors 28 und des Jochs 12 zusammen mit den Flussleitstücken 13 und 19 sowie dem Permanentmagneten 20 den Durchmesser dₛ₂ auf, welcher kleiner ist als der Durchmesser D_{J2} der Öffnung 9 des Jochs 12 und auch kleiner ist als der Durchmesser D_{J1} der Öffnung 8 des Jochs 11. Zur Stirnseite 16 des Rotorschafts 10 hin weist der Rotorschaft 10 im weiteren Verlauf den Durchmesser dₛ₁ auf, welcher kleiner ist als ein Durchmesser D_{J3} einer weiteren Öffnung 26 des Jochs 11. Der Rotorschaft 10 kann damit durch die Lagereinheit 1 hindurch verlaufen und dennoch in einer axialen Richtung aus der Lagereinheit 1 entnommen werden.

In dem in Fig. 6 dargestellten Beispiel können auch die Positionen von Joch 11 und Joch 12 vertauscht sein, das heißt, dass das axiale Joch 11 nicht notwendigerweise am Wellenende angeordnet ist oder das axiale Joch 11 näher der Stirnseite 17 des Rotorschafts 10 als das radiale Joch 12 zugeordnet ist. Lagereinheit 1 kann dementsprechend spiegelverkehrt ausgebildet sein.

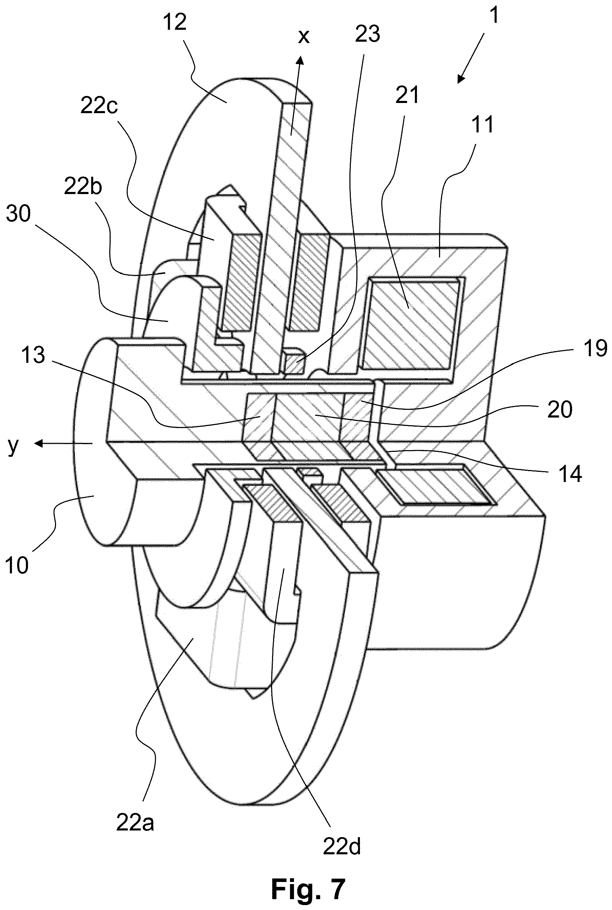

Fig. 7 illustriert ein weiteres Ausführungsbeispiel als perspektivische Schnittdarstellung. Das Beispiel aus Fig. 7 ist im Wesentlichen gleich wie das Beispiel aus Fig. 1-3, abgesehen von einer zusätzlichen Kompensationsspule 23, welche in z- Richtung betrachtet neben dem radialen Joch 12 angeordnet ist. Um den Einfluss des magnetischen Streuflusses der axialen Aktorspule 21 auf den Vormagnetisierungsfluss B_{BIAS} im radialen Luftspalt S_{R2} zu minimieren, kann die zusätzliche Kompensationsspule 23 nahe dem radialen Joch 12 vorgesehen werden. Die Kompensationsspule 23 kann koaxial zum Rotorschaft 10 angeordnet sein. Diese wird so bestromt, dass im Luftspalt S_{R2} der magnetische Streufluss der axialen Aktorspule 21 durch den magnetischen Fluss der Kompensationsspule 23 nahezu aufgehoben wird. Einfach kann man das mittels einer Serienschaltung von Aktorspule 21 und Kompensationsspule 23 erreichen. Dies verringert die Kopplung des axialen auf den radialen Regelkreis, welche die axiale bzw. radiale Lage des Rotorschafts 10 regeln. Im Übrigen wird auf die Beschreibung der vorherigen Figuren verwiesen.

Figur 8 zeigt einen Spinnrotor 2 mit einer Querschnittsdarstellung der erfindungsgemäßen Lagereinheit 1 eines Kombilagers. Die Lagereinheit 1 entspricht dem Aufbau und der Beschreibung der Lagereinheit 1 der Figuren 1 bis 5. In einem mittleren axialen Bereich des Rotorschafts 10 ist ein Antrieb 30 des Spinnrotors 2 angedeutet. Der Antrieb 30 des Spinnrotors 2 umfasst eine stationär angeordnete Spule 3 und einen Läufermagnet 4. Die Spule 3 ist stationär in einem Gehäuse 29 befestigt, während der Läufermagnet 4 in dem Rotorschaft 10 befestigt ist. Im Betrieb des Antriebs 30 des Spinnrotors 2 werden elektromagnetische Felder erzeugt, welche den Rotorschaft 10 mit seinem Läufermagnet 4 berührungslos innerhalb der Spule 3 in Drehung versetzen. Es werden damit Drehgeschwindigkeiten des Rotorschafts 10 und damit des Spinnrotors 2 bis zu etwa 200.000 Umdrehungen pro Minute erzeugt.

An dem der Lagereinheit 1 abgewandten Ende des Rotorschafts 10 ist an dem Rotorschaft 10 ein Rotortopf 5 angeordnet. In den Rotortopf 5 werden im Betrieb der Spinneinrichtung einzelne Fasern eingespeist, welche durch die hohe Drehzahl des Spinnrotors 2 an die innere Wand des Rotortopfs 5 gepresst und über die zentrale Achse des Spinnrotors 2 als gedrehter Faden abgezogen werden. Hierdurch können insbesondere beim Anspinnen des Fadens Unwuchten entstehen, die durch die Lagerung ausgeglichen werden müssen.

Um einen stabilen Lauf des Spinnrotors 2 zu gewährleisten, ist der Rotorschaft 10 der Spinnrotors 2 nicht nur durch die Lagereinheit 1 gelagert, sondern außerdem durch ein weiteres Lager, hier einem insbesondere radial wirkenden Magnetlager 6, abgestützt. Das hier dargestellte Magnetlager 6 wirkt lediglich passiv. Es regelt nicht die exakte Position des Rotorschafts 10. Gegensinnig gepolte Permanentmagnetringe 7a und 7b stoßen einander ab und führen so zu einer konzentrischen Lage der Permanentmagnetringe 7a und 7b und damit des Rotorschafts 10. Während der äußere Permanentmagnetring 7a stationär an einem Gehäuse 29 angeordnet ist, ist der innere Permanentmagnetring 7b an den Rotorschaft 10 befestigt. Der innere Permanentmagnetring 7b wird hierdurch innerhalb des äußeren Permanentmagnetring 7a zentriert. Durch mehrere aneinandergereihte Paare von Permanentmagnetringen 7a und 7b, im vorliegenden Ausführungsbeispiel vier Paare, wird eine stabile Lagerung des Rotorschafts 10 bewirkt. Durch eine wechselweise Magnetisierung aneinanderstoßender Paare wird zudem eine höhere radiale Steifigkeit des Rotorschafts 10 erzeugt. Durch einen axialen Versatz zwischen den Permanentmagnetringen 7a und 7b kann eine axiale Kraft auf den Rotorschaft 10 erzeugt werden. Dadurch können stationäre axiale Kräfte passiv, d.h. ohne Energieaufwand, durch die Permanentmagnetringe aufgenommen werden.

Figur 9 zeigt ein weiteres Beispiel eines Spinnrotors 2 mit einer Lagereinheit 1 eines erfindungsgemäßen Kombilagers. Die Ausführung der Lagereinheit 1 entspricht im Wesentlichen der Ausführung der Figur 6. Die Lagereinheit 1 ist mit dem Positionssensor 28 nahe an den Rotortopf 5 angeordnet. Der Positionssensor 28 misst dabei den Abstand zu einem Bund 27 am Rotortopf 5. Auf dem Rotorschaft 5 sind wiederum ringförmige Flusskonzentratoren 13 und 19 sowie ein ringförmiger Permanentmagnet 20 angeordnet, welche mit dem axialen Joch 11 und dem radialen Joch 12 korrespondieren. Im Anschluss an die Lagereinheit 1 folgt der Antrieb 30 des Rotorschafts 10 mit der Spule 3 und dem Läufermagnet 4. Den Rotorschaft 10 schließt das passive Magnetlager 6 ab, welches stationäre Permanentmagnetringe 7a und sich mit den Rotorschaft 10 mitdrehende Permanentmagnetringe 7b aufweist. Durch die Abstimmung der Durchmesser des Rotorschafts 10 mit den Öffnungen des Jochs 11 und des Jochs 12 sowie den weiteren Durchgängen im Bereich des Stators 3 des Antriebs 30 des Rotorschafts 10 und der Permanentmagnetringe 7a ist es auch bei dieser Ausgestaltung der Erfindung möglich, dass der Spinnrotor 2 aus der Spinnrotor-Lagerung entnommen werden kann, ohne dass Montagearbeiten erforderlich sind.

An dem Schaftdurchmesser dₛ₁ des Rotorschafts 10 sind mit dem Rotorschaft 10 verbundene Elemente, hier der Permanentmagnet 20 und die beiden einem Flussleitstücke bzw. Flusskonzentratoren 13 und 19 angeordnet und vergrößern damit den Rotorschaft 10 auf den Schaftdurchmesser dₛ₂. Die Stirnfläche 18, welche mit dem ersten, axialen Joch 11 zusammenwirkt, wird dementsprechend von einem dieser Elemente, hier dem Flusskonzentrator 19 gebildet.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Lagereinheit
- 2: Spinnrotor
- 3: Stator
- 4: Läufermagnet
- 5: Rotortopf
- 6: Magnetlager
- 7a,7b: Permanentmagnetring
- 8: erste Öffnung des Jochs 11
- 9: Öffnung des Jochs 12
- 10: Rotorschaft
- 11: erstes Joch
- 12: zweites Joch
- 13: Flusskonzentrator, Flussleitstück
- 14: Absatz
- 15: Öffnung
- 16: Stirnseite
- 17: Stege
- 18: Stirnfläche
- 19: Flusskonzentrator, Flussleitstück
- 20: Permanentmagnet
- 21: Aktorspule
- 22a-d: Aktorspulen
- 23: Kompensationsspule
- 24: Nuten
- 25: Stege
- 26: weitere Öffnung
- 27: Bund
- 28: Positionssensor
- 29: Gehäuse
- 30: Antrieb
- B_{BIAS}: magnetischer Fluss
- B₂₁: magnetischer Fluss
- B₂₂: magnetischer Fluss
- dₛ₁: erster Schaftdurchmesser
- dₛ₂: zweiter Schaftdurchmesser
- D_{J1}: Durchmesser der ersten Öffnung
- D_{J2}: Durchmesser der zweiten Öffnung
- D_{J3}: Durchmesser der weiteren Öffnung
- S_{A}: axialer Luftspalt
- S_{R1}: radialer Luftspalt
- S_{R2}: radialer Luftspalt
- Sx: Luftspalt zwischen erstem und zweitem Joch

## Patentansprüche

1. Spinnrotor-Lagerung einer Rotorspinnvorrichtung mit einem Rotorschaft (10) eines Spinnrotors (2) und mit einer Lagereinheit (1) zum kombinierten radialen und axialen Lagern des Rotorschafts (10),
wobei der Rotorschaft (10) einen ersten und einen zweiten Schaftdurchmesser (dₛ₁, dₛ₂) und mindestens einen zwischen dem ersten und zweiten Schaftdurchmesser (dₛ₁, dₛ₂) angeordneten Permanentmagneten (20) umfasst und ausgehend von dem ersten Schaftdurchmesser (ds₁) des Rotorschafts (10) an einer Seite des Permanentmagneten (20) eine sich radial zu einer Achse des Rotorschafts (10) hin erstreckende Stirnfläche (18) aufweist, und
die Lagereinheit (1) einen Stator mit einem ersten, axialen Joch (11) und einem zweiten, radialen Joch (12) umfasst, wobei
das erste Joch (11) eine erste Aktorspule (21) und eine erste Öffnung (8) mit einem ersten Durchmesser (D_{J1}) aufweist, in welcher ein sich radial zu einer Achse des ersten Jochs (11) hin erstreckender Absatz (14) angeordnet ist,
das zweite Joch (12) zumindest zwei zweite Aktorspulen (22a-d) und eine zweite Öffnung (9) mit einem zweiten Durchmesser (D_{J2}) aufweist und
das erste Joch (11) und das zweite Joch (12) in axialer Richtung des Rotorschafts (10) voneinander beabstandet sind,
und wobei bei einer Anordnung des Rotorschafts (10) in der Lagereinheit (1) im Betrieb der Lagerung
der erste Durchmesser (D_{J1}) der ersten Öffnung (8) größer als der erste Schaftdurchmesser (ds₁) ist, so dass zwischen der ersten Öffnung (8) und dem Rotorschaft (10) ein radialer Luftspalt (S_{R1}) gebildet ist,
die Stirnfläche (18) des Rotorschafts (10) mit dem Absatz (14) des ersten Jochs (11) so zusammenwirkt, dass zwischen der Stirnfläche (18) und dem Absatz (14) ein axialer Luftspalt (S_{A}) gebildet ist,
der zweite Durchmesser (D_{J2}) der zweiten Öffnung (9) größer als der zweite Schaftdurchmesser (dₛ₂) ist, so dass zwischen der Umfangsfläche des Rotorschafts (10) und dem zweiten Joch (12) ein weiterer radialer Luftspalt (S_{R2}) gebildet ist und
der Permanentmagnet (20) des Rotorschafts (10) zwischen dem ersten Joch (11) und dem zweiten Joch (12) angeordnet ist, so dass er bei Bestromung der Spulen (21, 22a-d) sowohl einen magnetischen Vormagnetisierungsfluss (B_{BIAS}) in dem axialen Luftspalt (S_{A}) des ersten Jochs (11) als auch in dem weiteren radialen Luftspalt (S_{R2}) des zweiten Jochs (12) erzeugt.

2. Spinnrotor-Lagerung gemäß Anspruch 1, **dadurch gekennzeichnet, dass** der erste Schaftdurchmesser (dₛ₁) gleich oder kleiner dem zweiten Schaftdurchmesser (dₛ₂) ist und/oder kleiner als der Durchmesser (D_{J2}) der zweiten Öffnung (9) ist.

3. Spinnrotor-Lagerung gemäß einem oder mehreren der vorherigen Ansprüche, **dadurch gekennzeichnet, dass** die Stirnfläche (18) den Rotorschaft (10) axial abschließt oder den Durchmesser (dₛ₂) des Rotorschafts (10) auf den ersten Schaftdurchmesser (ds₁) verkleinert.

4. Spinnrotor-Lagerung gemäß einem oder mehreren der vorherigen Ansprüche, **dadurch gekennzeichnet, dass** das erste Joch (11) und das zweite Joch (12), insbesondere über Stege (17), miteinander verbunden sind.

5. Spinnrotor-Lagerung gemäß einem oder mehreren der vorherigen Ansprüche, **dadurch gekennzeichnet, dass** der Rotorschaft (10) am Absatz (14) des ersten Jochs (11) endet oder durch das erste Joch (11) hindurch verläuft.

6. Spinnrotor-Lagerung gemäß einem oder mehreren der vorherigen Ansprüche, **dadurch gekennzeichnet, dass** der erste oder zweite Schaftdurchmesser (dₛ₁, dₛ₂) des Rotorschafts (10) mit einem mit dem Rotorschaft (10) verbundenen Element, insbesondere dem Permanentmagnet (20) und/oder einem Flussleitstück (13, 19) ausgebildet ist.

7. Spinnrotor-Lagerung gemäß dem vorherigen Anspruch, **dadurch gekennzeichnet, dass** die Stirnfläche (18) von dem mit dem Rotorschaft (10) verbundenen Element gebildet ist.

8. Spinnrotor-Lagerung gemäß einem oder mehreren der vorherigen Ansprüche, **dadurch gekennzeichnet, dass** der Permanentmagnet (20) in axialer Richtung magnetisiert ist und in einer zentralen Öffnung (15) des Rotorschafts (10) angeordnet ist oder um den Umfang des Rotorschafts (10) herum verläuft.

9. Spinnrotor-Lagerung gemäß einem oder mehreren der vorherigen Ansprüche, **dadurch gekennzeichnet, dass** zumindest eine Kompensationsspule (23) koaxial zur ersten Aktorspule (21), insbesondere zwischen dem ersten und dem zweiten Joch (11, 12) angeordnet ist, um bei geeigneter Bestromung den magnetischen Streufluss der ersten Aktorspule (21) im radialen Luftspalt (S_{R1}) zu verringern.

10. Spinnrotor-Lagerung gemäß einem oder mehreren der vorherigen Ansprüche, **dadurch gekennzeichnet, dass** dem Rotorschaft (10) ein Positionssensor (28) zugeordnet ist zur Ermittlung der axialen und/oder radialen Position des Rotorschafts (10) in Bezug auf die Lagereinheit (1).

11. Spinnrotor-Lagerung gemäß einem oder mehreren der vorherigen Ansprüche, **dadurch gekennzeichnet, dass** der Rotorschaft (10) mit der Lagereinheit (1) und einem weiteren Lager, insbesondere einem radialen Magnetlager (6), gelagert ist.

12. Lagereinheit einer Spinnrotor-Lagerung gemäß einem oder mehreren der vorherigen Ansprüche, **dadurch gekennzeichnet, dass** die Lagereinheit (1) einen Stator mit einem ersten, axialen Joch (11) und einem zweiten, radialen Joch (12) umfasst, wobei
das erste Joch (11) eine erste Aktorspule (21) und eine erste Öffnung (8) mit einem ersten Durchmesser (D_{J1}) aufweist, in welcher ein sich radial zu einer Achse des ersten Jochs hin erstreckender Absatz angeordnet ist,
das zweite Joch (12) zumindest zwei zweite Aktorspulen (22a-d) und eine zweite Öffnung (9) mit einem zweiten Durchmesser (D_{J2}) aufweist und
das erste Joch (11) und das zweite Joch (12) in axialer Richtung voneinander beabstandet sind.

13. Rotorschaft einer Spinnrotor-Lagerung gemäß einem oder mehreren der vorherigen Ansprüche, **dadurch gekennzeichnet, dass** der Rotorschaft (10) einen ersten und einen zweiten Schaftdurchmesser (dₛ₁, dₛ₂) und mindestens einen zwischen dem ersten und zweiten Schaftdurchmesser (dₛ₁, dₛ₂) angeordneten Permanentmagneten (20) aufweist und ausgehend von dem ersten Schaftdurchmesser (ds₁) des Rotorschafts (10) an einer Seite des Permanentmagneten (20) eine sich radial zu einer Achse des Rotorschafts (10) hin erstreckende Stirnfläche (18) aufweist.

14. Rotorschaft gemäß dem vorherigen Anspruch, **dadurch gekennzeichnet, dass** an einem Ende des Rotorschafts (10) ein Rotortopf (5) angeordnet ist.

15. Rotorschaft gemäß einem oder mehreren der vorherigen Ansprüche, **dadurch gekennzeichnet, dass** der Permanentmagnet (20) an einem der Enden des Rotorschafts (10) angeordnet ist.
